# EUROPÄISCHE PATENTANMELDUNG

(11) **EP 1 008 434 A1**
(43) Veröffentlichungstag der Anmeldung: **14.06.2000**
(21) Anmeldenummer: 99124725.5
(22) Anmeldetag: 12.12.1999
(51) Int. Cl.: B29C 47/00, B29C 47/10, B29C 47/50, B29B 17/00

(54) **Verfahren und Anlage zur Herstellung von faserverstärkten Kunststoffmassen**

(30) Priorität: 13.12.1998 DE 19857288
(71) Anmelder: Maschinenfabrik J. Dieffenbacher GmbH & Co., 75031 Eppingen (DE)
(72) Erfinder: Therolf, Dieter, 71665 Vaihingen, Enz. (DE)
(74) Vertreter: Hartdegen, Anton

(57) **Zusammenfassung**

Die Erfindung betrifft ein Verfahren und eine Anlage zur Herstellung von faserverstärkten Kunststoffmassen unter Verwendung eines Plastifizierextruders, bei dem einerseits Fasern und Thermoplastgranulat zerteilt und plastifiziert werden, während gleichzeitig langfaserverstärktes Recyclatchips plastifiziert, die beiden Massen in einem Plastifizierextruder miteinander vermischt und als weiterverarbeitbares Plastifikat ausgetragen wird. Die Erfindung besteht darin, daß die plastifizierten langfaserverstärkten Recyclatchips in einen Einlaß eines Direkt-LFT-Zweischnecken-Plastifizierextruders gefördert wird, der in Förderrichtung nach dem Zerschneiden der Fasern und dem Plastifizieren des Thermoplastgranulats liegt und anschließend die beiden plastifizierten Massen in der Förder- und Mischzone des Direkt-LFT-Plastifizierextruder vermischt und als Plastifikat herausgefördert werden.

## Beschreibung

Die Erfindung bezieht sich auf ein Verfahren zur Herstellung von faserverstärkten Kunststoffmassen nach dem Oberbegriff des Anspruchs 1 und auf eine Anlage zur Durchführung des Verfahrens nach dem Oberbegriff des Anspruchs 3.

Für das Verarbeiten von langfaserverstärkten Thermoplasten zu Formteilen sind zwei Preßverfahren bekannt. Das Platinenverfahren für Glasmattenverstärkte Thermoplasten (GMT) und das Plastifikatverfahren für Langfaserverstärkte Thermoplasten (LFT). Beim Platinenverfahren handelt es sich um flächige Halbzeugplatinen, welche im GMT-Ofen aufgeheizt werden. Die Platinen werden nach dem Aufheizen (plastifizieren) zu einem Preßpaket zusammengelegt und zum Formteil verpreßt.
Beim Plastifikatverfahren unterscheidet man wiederum das Halbzeugverfahren, wobei das verwendete Stäbchengranulat LFG (LangFaserGranulat) in einem Extruder zu einem Plastifikat plastifiziert, ausgestoßen und dann zu einem Formteil verpreßt wird und das Direktverfahren LFT (LangFaserverstärkte Thermoplasten), wobei aus den Fasern und dem Thermoplastgranulat die Mischung in einem Extruder hergestellt, plastifiziert und das Plastifikat herausgefördert wird. Dieses Plastifikat wird dann anschließend in einer Presse zu einem Formteil verpreßt. Die beiden Plastifizierverfahren haben den Vorteil, daß Recyclatmaterial direkt beim Formteilprozeß, das heißt bei der Herstellung des Plastifikats verarbeitet werden kann. Dieses Recyclatmaterial sind innerbetrieblich die Ausschnitteile und der Produktionsausschuß. Dieses Material, zu Recyclatchips zerkleinert, kann dann direkt im Kreislauf wiederverwendet werden. Damit muß dieser Produktionsabfall nicht gesammelt und über größere Strecken transportiert werden, um Verwendung in einem Halbzeugprodukt zu finden. Weitere Vorteile sind, daß beim Direktrecycling die thermische Belastung geringer ist und die Recyclatqualität bestens bekannt ist. Für die Verarbeitung der Recyclatchips (wiederverwertbarer Rohstoffabfallteile) und Stäbchengranulate wurden Extruder entwickelt, welche identische Anforderungsmerkmale haben und deshalb auch die Möglichkeit bieten, die Halbzeugstäbchen und die Recyclatchips einzeln oder gemischt zu einem Plastifikat zu plastifizieren. Die Anforderung, daß diese Materialien mit wenig Scherarbeit und geringen Stahldrücken aufgeschmolzen/plastifiziert werden, führte zu relativ großen Schneckendurchmessern und kleinen Drehzahlen mit großem Längen/Durchmesser-Verhältnissen. Bei der Verarbeitung der Recyclatchips zusammen mit dem Direkt-LFT-Verfahren sind zwei Extruder erforderlich, wobei für die Recyclatchips ein Extruder vorgenannter Eigenschaften erforderlich ist und wobei beide Plastifikate anschließend vermischt werden müssen. Dabei hat sich gezeigt, daß das Vermischen der beiden Materialströme eine hohe technische Anforderung stellt, zumal möglichst keine Scherarbeit eingesetzt werden solle, um die Fasern nicht zu zerkleinern.
Bekannt ist, daß der Zweischneckenextruder des Direkt-LFT-Verfahrens das Neuwarematerial in den Einschneckenextruder des Recyclatmaterials fördert. Nach der Zusammenführung der beiden Materialströme wird dann im Einschneckenextruder des Recyclatstranges versucht, diese beiden Materialströme zu vermischen und als Plastifikat herauszufördern. Für das Aufschmelzen der Recyclatchips ist jedoch eine sehr lange Aufschmelzstrecke mit geringer Schneckendrehzahl erforderlich, damit wenig Scherenergie eingebracht wird und die Fasern in ihrer Länge weitgehend erhalten bleiben. Bei diesem Verfahren soll nun im Mischbereich die relativ geringe Recyclatmaterialmenge (0 .... 40%) mit dem größeren Materialstrom der Neuware, welche seitlich zudosiert wird, vermischt werden. Dabei stellt der Übergang vom Einschneckenextruder mit dem relativ geringen Recyclatstrom, zu dem ab der Zusammenführung vorhandenen Gesamtstrom, ein sehr großes Problem dar. Die in der Mischzone erreichbare Vermischung ist nur unzureichend, weil dieser Mischbereich nur mit der gleichen Drehzahl wie der Recyclatbereich arbeiten kann. Die zusätzliche Forderung, daß auch mit 0% Recyclatanteil gearbeitet werden soll, bringt die Gefahr, daß der Bereich zum Aufschmelzen des Recyclatmaterials trocken läuft und dadurch vorzeitig verschleißt.

Der Erfindung liegt die Aufgabe zugrunde, ein Verfahren anzugeben, mit dem eine gute Vermischung der zwei unterschiedlichen Qualitäten von Neuwareplastifikat und Recyclatplastifikat ausgeglichen werden kann, die Recyclatchips vor dem Vermischen sicher plastifiziert sind, damit diese Recyclatchips nicht noch in der Neuwareschmelze bzw. im Hauptmassenstrom aufgeschmolzen werden müssen, um damit das Mischergebnis und -qualität deutlich zu verbessern sowie eine Anlage zu schaffen, mit der die Vorgaben des Verfahrens in vorteilhafter Weise verwirklicht werden können, insbesondere damit auch der Anschluß des Recyclatextruders an den Direkt-LFT-Plastifizierextruder optimal verwirklichbar ist.

Die Lösung für das Verfahren besteht darin, daß die plastifizierten langfaserverstärkten Recyclatchips in einem Einlaß eines Direkt-LFT-Zweischnecken-Plastifizierextruders gefördert wird, der in Förderrichtung nach dem Zerschneiden der Fasern und dem Plastifizieren des Thermoplastgranulats liegt und anschließend die beiden plastifizierten Massen in der Förder- und Mischzone des Direkt-LFT-Plastifizierextruder vermischt und als Plastifikat herausgefördert werden.

Die Lösung für die Anlage besteht darin, daß ein Zweischnecken-Plastifizierextruder als Direkt-LFT-Plastifizierextruder für die Fasern mit Thermoplastgranulat ausgeführt und mit festem Stand auf einer Unterlage fixiert ist, während der andere als Einschnecken-Plastifizierextruder ohne Mischzone für die langfaserverstärkten Recyclatchips ausgebildet und an einem Drehpunkt mit Materialzuführung und mit variablem Anordnungswinkel zu bzw. an den Direkt-LFT-Plastifizierextruder an- und abkoppelbar ausgeführt ist.

Für das Aufschmelzen der Recyclatchips wird ohne Verlängerung der Mischzone ein Einschnecken-Plastifizierextruder verwendet. Dieser Einschnecken-Plastifizierextruder fördert dann das aufgeschmolzene / plastifizierte Recyclatmaterial in den Zweischnecken-Plastifizierextruder des Direkt-LFT-Materials, wobei dies nach dem Zerteilen der Endlosfasern und am Anfang der Förder- und Mischzone erfolgt. Dies hat den Vorteil, daß der kleinere Materialstrom dem größeren Materialstrom zugeführt wird. Desweiteren entfällt die Drehzahlabhängigkeit von verschiedenen Aufgaben im Einschnecken-Plastifizierextruder, was bei weniger bis keiner Recyclatmenge auch zu keinem Verschleiß- bzw. Trockenlaufproblem führt. Im Zweischnecken-Plastifizierextruder des Direkt-LFT-Verfahrens wird die Extruderdrehzahl in Abhängigkeit des Schneckenfüllgrades im Förderbereich durch das Gesamttexgewicht der Endlosfaserstränge und das Mischungsverhältnis/Glasfaseranteil eingestellt. Deshalb ist es kein Problem die vorgewählte Recyclatmenge bei dem Schneckenfüllgrad zu berücksichtigen und das Gesamttexgewicht und die Schneckendrehzahl entsprechend zu wählen. Durch die höhere Drehzahl des Mischbereiches und den geeigneten Mischgeometrien wird die Mischqualität von Neuware und Recyclatware deutlich verbessert werden.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: in schematischer Darstellung die Anlage zur Durchführung des Verfahrens gemäß der Erfindung in Draufsicht,
- Figur 2: die Anlage nach Figur 1 in Seitenansicht und
- Figur 3: in einem Ausschnitt A aus Figur 2 die Ankopplung des Einschnecken-Plastifizierextruder an den Direkt-LFT-Plastifizierextruder.

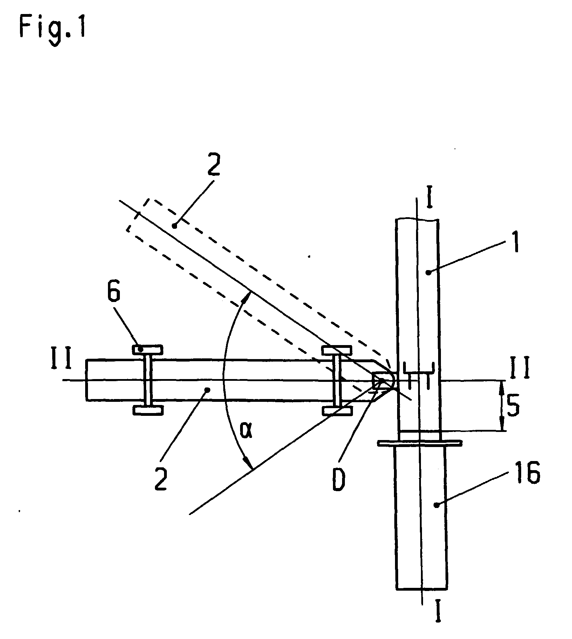

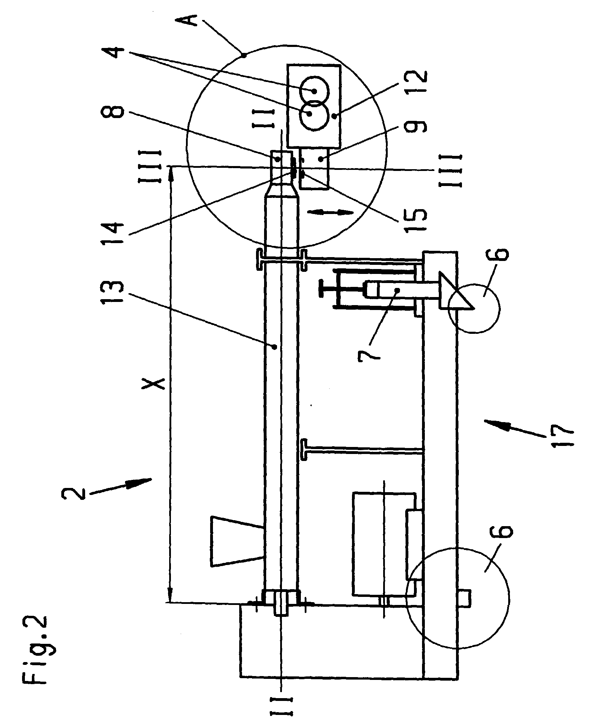

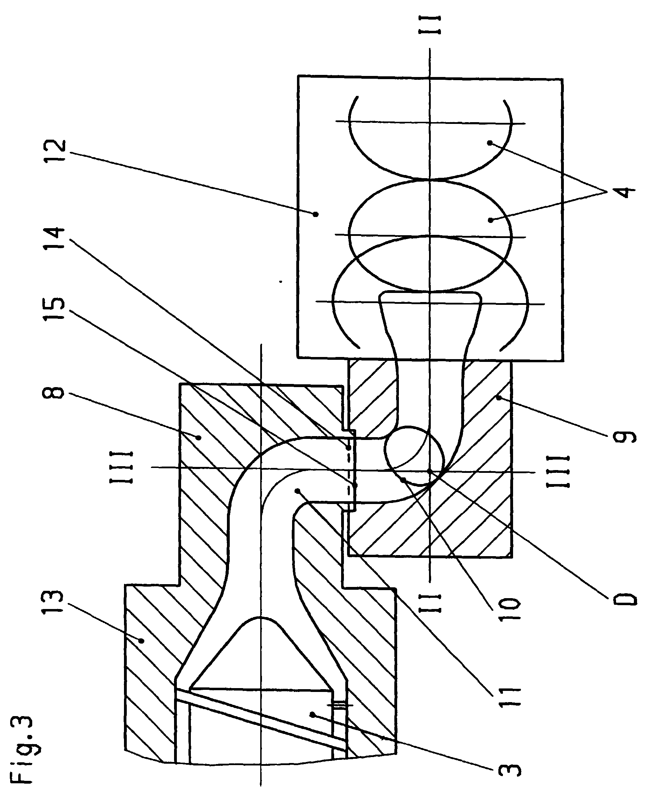

Die Figuren 1 bis 3 zeigen die Anlage zur Durchführung des Verfahrens in Draufsicht auf den Direkt-LFT-Plastifizierextruder 1 mit Gehäuse 12 in Zweischneckenausführung 4 und den mit dem Anordnungswinkel α drehbar um den Drehpunkt D angeordneten Einschnecken-Plastifizierextruder 2 mit Gehäuse 13 und Einschneckenausführung 3. Bei der Anordnung der Plastifizierextruder 1 und 2 kommen je nach Platzverhältnissen die unterschiedlichsten Zuordnungswünsche zum tragen. Da es sich bei den Plastifizierextrudern 1 und 2 um beheizte Aggregate - im Normalfall bis zu einer Arbeitstemperatur von 300° Celsius - handelt, müssen hierbei auch Wärmedehnungsmaße X berücksichtigt werden, damit sich die Geräte nicht verspannen, was auch zu vorzeitigem Verschleiß oder Versagen führen kann. Ein bekanntes System ist, daß die beiden Plastifizierextruder 1 und 2 auf Schienen gestellt werden. Dabei ergibt sich der Schnittpunkt der beiden Plastifizierextruderachsen I-I und II-II aus dem gemeinsamen Festpunkt und die übrigen Teile bewegen sich auf den Schienen bzw. auf dem jeweiligen Gestell entsprechend. Die Verfahrbarkeit der Plastifizierextruder 1 und 2 zu- und auseinander ist auch für das Herausziehen der Schnecke 3 des angedockten Einschnecken-Plastifizierextruders 2 erforderlich. Zudem besteht der verfahrenstechnische Wunsch, daß die Qualität des seitlich zudosierten Materials zur Verfahrensoptimierung direkt beurteilt werden kann. Dazu muß der Einschnecken-Plastifizierextruder 2 einfach entkoppelbar sein. Der drehbare und aushebbare Anschluß nach Figur 2 und 3 ermöglicht ein einfaches Entkoppeln des Einschnecken-Plastifizierextruders 2 mit dem Düsenkopf 8 vom Einlaßaufsatz 9 des Zweischnecken-Plastifizierextruders 1, wobei die Hubeinrichtung 7 am Laufwagen 17 den Einschnecken-Plastifizierextruder 1 oder 2 heraushebt. Damit können die Qualität des Recyclatplastifikats vor der Zumischung bewertet und die Produktionsparameter relativ einfach optimiert werden. Durch den Einlaßquerschnitt 10 des Zuführkanals 11 kann die gleichmäßige Vermischung vorteilhaft beeinflußt werden. Der Zuführkanal 11 mündet dabei am Beginn der Förder- und Mischzone 5 im Zweischnecken-Plastifizierextruder 1 zum Einbringen der plastifizierten Recyclatchips.

Zur Lösung der vorher angeführten Probleme wird weiter der Zweischnecken-Plastifizierextruder 1 auf dem Boden ohne Verfahrmöglichkeit fixiert. Vorteilhaft ist dabei die Einsparung der Schienen, der Räder und der beweglichen Energiezuführung. Der das Recyclatplastifikat fördernde Einschnecken-Plastifizierextruder 2 wird an einem Drehpunkt D an dem Zweischnecken-Plastifizierextruder 1 angekoppelt. Damit ist der Einschnecken-Plastifizierextruder 2 in seinem Anordnungswinkel α zu dem Zweischnecken-Plastifizierextruder 1 in großen Bereich variabel. Die Wärmeausdehnung des Zweischnecken-Plastifizierextruders 1 wird mittels eines Radsatzes Laufrädern 6 kompensiert, die aber keine Schienen benötigen.

Weiter kann bei abgekoppeltem Einschnecken-Plastifizierextruder 2 mit einem entsprechenden Düsenkopf der Direkt-LFT-Plastiftzierextruder 1 bei Verwendung des Plastifikatabzuges 16 für eine alternative Produktion von Recyclat und/oder Stäbchengranulat Verwendung finden.
Für das Entkoppeln und Verdrehen in der Achse III-III der beiden Plastifizierextruder 1 und 2 ist der Düsenkopf 8 des Einschnecken-Plastifizierextruder 2 mit einem Aufsatzring 14 und der Einlaßaufsatz 9 des Zweischnecken-Plastifizierextruders 1 mit einer passenden Ringaussparung 15 ausgeführt. Der Mantel des Aufsatzringes 14 und seine Stirnflächen dienen dabei in der Ringaussparung 15 als Gleitlager.

### Bezugszeichenliste

- 1.: Zweischnecken-Plastifizierextruder
- 2.: Einschnecken-Plastifizierextruder
- 3.: Recyclatschnecke
- 4.: Förder- und Mischzone
- 5.: Förder- und Mischzone in 1
- 6.: Laufräder
- 7.: Hubeinrichtung
- 8.: Düsenkopf an 2
- 9.: Einlaßaufsatz an 1
- 10.: Querschnitt des Zuführkanals
- 11.: Zuführkanal des Recyclatchipplastifikats
- 12.: Gehäuse von 1
- 13.: Gehäuse von 2
- 14.: Aufsatzring an 8
- 15.: Ringaussparung an 9
- 16.: Plastifikatabzug an 1
- 17.: Laufwagen
- D: Drehpunkt
- α: Anordnungswinkel 1 zu 2
- I-I: Achse von 1
- II-II: Achse von 2
- III-III: Senkrechte Achse zu α
- X: Wärmedehnungsmaß

## Patentansprüche

1. Verfahren zur Herstellung von faserverstärkten Kunststoffmassen unter Verwendung eines Plastifizierextruders, bei dem einerseits Fasern und Thermoplastgranulat zerteilt und plastifiziert werden während gleichzeitig langfaserverstärktes Recyclatchips plastifiziert, die beiden Massen in einem Plastifizierextruder miteinander vermischt und als weiterverarbeitbares Plastifikat ausgetragen wird,
**dadurch gekennzeichnet,** daß die plastifizierten langfaserverstärkten Recyclatchips in einem Einlaß eines Direkt-LFT-Zweischnecken-Plastifizierextruders gefördert wird, der in Förderrichtung nach dem Zerschneiden der Fasern und dem Plastifizieren des Thermoplastgranulats liegt und anschließend die beiden plastifizierten Massen in der Förder- und Mischzone des Direkt-LFT-Plastifizierextruder vermischt und als Plastifikat herausgefördert werden.

2. Verfahren zur Herstellung von faserverstärkten Kunststoffmasse nach Anspruch 1, **dadurch gekennzeichnet,** daß das plastifizierte Recyclatchipsvolumen mit 0 bis 40 Volumenprozent der beiden mischbaren Massen in den Direkt-LFT-Zweischnecken-Plastifizierextruder eingeführt wird.

3. Anlage zur Durchführung des Verfahrens nach Anspruch 1, bestehend aus zwei Plastifizierextrudern, wobei in einem Fasern mit Thermoplastchips und im anderen langfaserverstärktes Recyclatgranulat zuführbar sind, **dadurch gekennzeichnet,** daß ein Zweischnecken-Plastifizierextruder als Direkt-LFT-Plastifizierextruder (1) für die Fasern mit Thermoplastgranulat ausgeführt und mit festem Stand auf einer Unterlage fixiert ist, während der andere als Einschnecken-Plastifizierextruder (2) ohne Mischzone für die langfaserverstärkten Recyclatchips ausgebildet und an einem Drehpunkt (D) mit Materialzuführung und mit variablem Anordnungswinkel (α) zu bzw. an den Direkt-LFT-Plastifizierextruder (1) an- und abkoppelbar ausgeführt ist.
